# EUROPEAN PATENT APPLICATION

(11) **EP 3 702 615 A1**
(43) Date of publication of application: **02.09.2020**
(21) Application number: 19159981.0
(22) Date of filing: 28.02.2019
(51) Int. Cl.: F03D 15/20, F03D 80/70

(54) **DIRECT-DRIVE WIND TURBINE**

(71) Applicant: Siemens Gamesa Renewable Energy A/S, 7330 Brande (DK)
(72) Inventor: Kumar D, Rathesh, Bangalore 560100 (IN)
(74) Representative: Aspacher, Karl-Georg

(57) **Abstract**

Direct-drive wind turbine comprising a hub (11), a generator (4) comprising a rotor (5) and a single main bearing (14) for coupling the hub (11) and the rotor (4) rotatable to a support (15), wherein the hub (11) is directly attached at the rotor (5) and an outer ring (17) of the main bearing (14), which outer ring (17) is radially positioned inside the hub (11), is attached at the rotor (5).

## Description

The invention relates to a direct-drive wind turbine comprising a hub, a generator comprising a rotor and a single main bearing for coupling the hub and the rotor rotatable to a support.

A wind turbine, as commonly known, transfers the energy of moving air into electrical energy. The air accelerates the rotor of a wind turbine, the rotation of the rotor is transferred to a generator that generates the electrical energy. A recent concept of a wind turbine is the so-called direct-drive wind turbine. This type of wind turbine allows the transfer of the rotational energy of the rotor to the generator without an intermediate gear box, as the rotor of the wind turbine is directly connected to the rotor of the generator. So this type of wind turbine has a very short drive train comprising the chain of mechanical connected parts leading from the rotor of the wind turbine to the rotor of the generator.

This drive train comprises a hub, to which the rotor blades of the turbine, on which the flowing air acts, are connected. The drive train further comprises at least one main bearing, while in the specific type of a so-called single bearing direct-drive wind turbine only one main bearing is provided. This main bearing comprises an outer ring and an inner ring, which inner ring is attached to a stationary part or support of the wind turbine and thus connected to the tower of the wind turbine. The outer ring, which is part of the drive train, is sandwiched between the hub and the rotor of the generator. This means that the hub is attached at one side of the outer ring of the main bearing, while the rotor is attached at the other side of the outer ring. The rotor, as commonly known, comprises respective magnets and interacts with a stator, which is also stationary and which comprises respective other magnets. The rotation of the rotor of the turbine results in the rotation of the hub und thus, as connected via the outer ring to the rotor, in a rotation of the rotor, which rotates relative to the stationary stator. The set up of such a direct-drive wind turbine with a single main bearing is commonly known.

In the current design of such a wind turbine with the outer ring of the main bearing being sandwiched between the hub and the rotor of the generator, both of which are directly attached at the outer ring, the load from the hub is transferred directly to the main bearing and via the main bearing to the tower. So a significant part of the load rests directly on the outer ring respectively the main bearing. To cope with this high loads the size of the bearing has been increased in order to conquer the problem of a premature bearing failure due to the significant stress under operation. The large size of the bearing leads to additional costs and makes the main bearing relatively large and heavy.

It is an object of the invention to provide an improved direct-drive wind turbine.

This object is reached by means of a direct-drive wind turbine as depicted above, which is characterized in that the hub is directly attached at the rotor and an outer ring of the main bearing, which outer ring is radially positioned within the hub, is attached at the rotor.

According to the invention the outer ring is no longer sandwiched between the hub and the rotor. Instead the hub is directly attached at the rotor. The main bearing is arranged completely within the hub, seen in a radial direction, and the outer ring has a smaller outer diameter than the inner diameter of the hub. Thus it is possible to attach the outer ring at the rotor at a radially inner position compared to the attachment position of the hub.

Due to this new arrangement the load path from the rotor assembly comprising the rotor and the hub to the main bearing is changed compared to the arrangement in the prior art, as the hub is directly connected to the generator rotor. As a result the stiffness of the rotor actively participates in controlling the displacement of the main bearing and in turn reduces the bearing stress and increases the bearing lifetime significantly.

The layout of the main bearing no longer needs to be oversized, as also the rotor is integrated in the load path. Another advantage is that the design of the hub at the interface to the rotor no longer needs to address the design of the outer ring but is independent of the outer ring, which is no longer connected the hub.

Furthermore, the rotor moves closer to the tower, as the hub is directly attached to the rotor of the generator and the outer ring is no longer sandwiched in between. This reduces the tilt moment on all components at the downwind side of the turbine and has a potential structural benefit for all components in the load path.

In a preferred embodiment the rotor comprises a rotor housing, with a radially inward extending front plate, at which the hub and the outer ring are attached. Usually the rotor comprises a rotor housing having a front plate, to which a ring-shaped housing part is attached, to which at the inner surface the respective magnets are attached. Preferably the hub and the outer ring are attached to the front plate, most preferably as close as possible to the inner diameter, so that the diameter of the hub and the outer ring are relatively small.

According to the invention the load from the rotor to the main bearing is transferred via the rotor respectively the rotor housing. In case of need the rotor respectively the rotor housing may be stiffened. A stiffening ring plate maybe provided for stiffening the rotor or the front plate of the rotor house in the area in which the hub and/or the outer ring are attached at the rotor or the front plate. This stiffening or reinforcing ring plate allows to control the local stiffness of the rotor respectively the rotor housing front plate right in the area where the hub respectively the outer ring are attached.

Preferably the stiffening plate is attached at the outer ring at the ring side opposite to the ring side attached at the rotor or the front plate. So the outer ring is sandwiched between the stiffening or reinforcement plate and the rotor or the front plate. By attaching the stiffening plate at the outer ring also the rotor respectively the front plate is stiffened.

In an alternative it is possible to attach the stiffening plate at the side of the rotor or the front plate opposite to the side where the outer ring is attached. In this embodiment the rotor respectively the rotor front plate is sandwiched between the outer ring and the stiffening plate.

In a third alternative it is possible to sandwich the stiffening plate between the rotor or the front plate of the rotor and the outer ring.

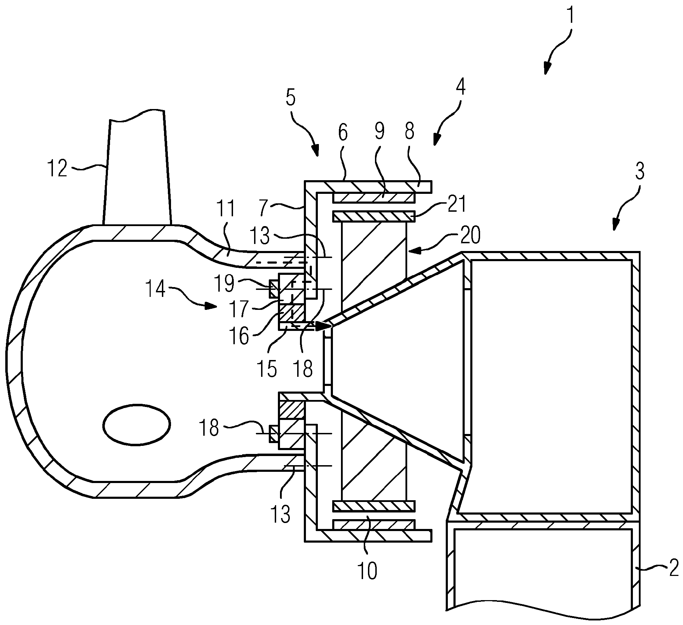

Further details and advantages of the invention become evident from the embodiments discussed below as well as from the figure.

The figure is schematical and shows a principle sketch of a part of an inventive wind turbine.

The wind turbine 1 comprises a tower 2 to which a nacelle 3 is attached, which is rotatable around a vertical axis.

The nacelle 3 comprises a generator 4 with a stator 20 with a bundle of magnets 21, which stator 20 is stationary attached at or in the nacelle 3.

The generator 4 further comprises a rotor 5 with a rotor housing 6 comprising a front plate 7 extending radially inward and a cylindrical housing part 8, at which magnets 9 are attached, which interact with the magnets 21 of the stator 20, and which are spaced from the magnets 21 by an air gap 10.

The rotor 5 is directly coupled with a hub 11, at which respective rotor blades 12, for example three blades, are attached (only one of them is shown in the figure). The hub is directly attached or fixed at the front plate 7 by means of respective connection means 13 like bolt connections.

When blowing air acts on the rotor blades 12 the hub 11 rotates and with the hub 11 also the rotor 5 rotates, as it is directly fixed to the hub 11.

A single main bearing 14 connects the hub-rotor-combination to a stationary support 15, which is part of the nacelle 3 or attached to the nacelle 3. The main bearing 14 comprises an inner ring 16, which is firmly fixed to the stationary support 15. An outer ring 17 is rotatable relative to the inner ring 16 by means of bearing elements like bolts or tapered rollers or the like, so that the outer ring 17 can rotate relative to the stationary inner ring 16. The outer ring 17 is directly attached to the rotor 5 respectively to the front plate 7 by means of respective fixation elements 18 like bolts or the like.

For stiffening the front plate a stiffening plate 19 may optionally be provided, which is shown in the figure and which is attached to the outer ring 15 opposite to the front plate 7 and held in place by the respective fixation elements 18. As the figure shows the main bearing 14 is, seen in the radial direction, arranged completely inside the hub 11. The outer ring 17 has a smaller outer diameter than the inner diameter of the hub 11 at its end fixed to the front plate 7.

This inventive arrangement with the hub 11 being directly attached at the rotor 5 respectively the front plate 7 and with the inner ring being arranged inside of the hub and also being directly attached to the rotor 5 respectively the front plate 7 changes the load path in a positive way. The load path is shown by the dashed line in the figure. It runs from the hub 11 to the front plate 7 and from the front plate 7 to the outer ring 17 and further via the rollers and the inner ring 16 to the stationary support 15 and finally to the tower 2. So the stiffness of the front plate 7 of the rotor housing 6 actively participates in the in the load path and in controlling the displacement of the outer ring respectively the main bearing and intern reduces the bearing stress leading to an increased bearing lifetime.

As the hub 11 is directly attached to the front plate 7 it is obvious that the rotor blades 12 and thus the rotor of the wind turbine 1 is closer to the tower 2, as the outer ring is no longer sandwiched between the hub 11 and the front plate 7. Moving the rotor closer to the tower 2 reduces the tilt moment on all components at the downwind side of the turbine.

Although the stiffening plate 19 in the shown embodiment is attached at the outer ring 17 at the side opposite to the side where the front plate 7 is attached it is possible to attach the stiffening plate 19 at the front plate 7, thus sandwiching the front plate 7 between the outer ring 17 and the stiffening plate 18, or at the opposite side of the front plate 7.

Although the present invention has been described in detail with reference to the preferred embodiment, the present invention is not limited by the disclosed examples from which the skilled person is able to derive other variations without departing from the scope of the invention.

## Claims

1. Direct-drive wind turbine comprising a hub (11), a generator (4) comprising a rotor (5) and a single main bearing (14) for coupling the hub (11) and the rotor (4) rotatable to a support (15), **characterised in that** the hub (11) is directly attached at the rotor (5) and an outer ring (17) of the main bearing (14), which outer ring (17) is radially positioned inside the hub (11), is attached at the rotor (5).

2. Wind turbine according to claim 1, **characterised in that** the rotor (5) comprises a rotor housing (6) with a radially inward extending front plate (7), at which the hub (11) and the outer ring (17) are attached.

3. Wind turbine according to claim 1 or 2, **characterised in that** a stiffening ring plate (19) is provided for stiffening the rotor (5) or the front plate (7) of the rotor housing (6) in the area in which the hub (11) and/or the outer ring (17) are attached at the rotor (5) or the front plate (7).

4. Wind turbine according to claim 3, **characterised in that** the stiffening plate (18) is attached at the outer ring (17) at the ringside opposite to the ringside attached at the rotor (5) or the front plate (7).

5. Wind turbine according to claim 3, **characterised in that** the stiffening plate (18) is attached at the side of the rotor (5) or the front plate (7) opposite to the side where the outer ring (17) is attached, or that the stiffening plate (7) is sandwiched between the rotor (5) or the front plate (7) and the outer ring (17).
